# EUROPEAN PATENT SPECIFICATION

(11) **EP 4 560 431 B1**
(45) Date of publication and mention of the grant of the patent: **11.11.2026**
(21) Application number: 23909378.4
(22) Date of filing: 20.09.2023
(51) Int. Cl.: G06F 1/16, H04M 1/02

(54) **SLIDING OPENING/CLOSING MECHANISM AND ELECTRONIC DEVICE**
SCHIEBEÖFFNUNGS-/-SCHLIESSMECHANISMUS UND ELEKTRONISCHE VORRICHTUNG
MÉCANISME D'OUVERTURE/FERMETURE COULISSANT ET DISPOSITIF ÉLECTRONIQUE

(30) Priority: 29.12.2022 CN 202211717829
(43) Date of publication of application: 28.05.2025
(73) Proprietor: Huawei Technologies Co., Ltd., Shenzhen, Guangdong 518129 (CN)
(72) Inventor: NAGAI, Kenji, Shenzhen, Guangdong 518129 (CN); LIN, Hui, Shenzhen, Guangdong 518129 (CN); HAZAMA, Yuji, Shenzhen, Guangdong 518129 (CN)
(74) Representative: Pfenning, Meinig & Partner mbB
(86) International application number: PCT/CN2023/120149
(87) International publication number: WO 2024/139443

(56) References cited:
- CN-A- 102 036 524
- CN-A- 113 114 832
- CN-A- 114 546 035
- CN-U- 201 467 594
- CN-U- 201 533 468
- JP-A- 2010 252 115
- US-A1- 2022 240 400
- US-A1- 2022 303 373

## Description

### CROSS-REFERENCE TO RELATED APPLICATIONS

This application claims priority to Chinese Patent Application No. 202211717829.4, filed with the China National Intellectual Property Administration on December 29, 2022 and entitled "SLIDING OPENING/CLOSING MECHANISM AND ELECTRONIC DEVICE'.

### TECHNICAL FIELD

This application relates to the field of electronic device technologies, and in particular, to a sliding opening/closing mechanism and an electronic device.

### BACKGROUND

As science and technology develop and people's daily life is becoming richer, smartphones are increasingly becoming one of indispensable items in work and life. In particular, with advent of flexible displays, terminal forms of smartphones are also diversifying, such as foldable mobile phones with a flexible display and side slider mobile phones with a flexible display.

A sliding opening/closing mechanism is a vital component in a side slider mobile phone for implementing a form change function. A slider part is usually disposed in the sliding opening/closing mechanism. With the slider part being driven to slide, the mobile phone switches between a closed state and an unfolded state. There are mainly several types of sliding opening/closing mechanism such as an electric type, a spring-loaded type, and a spring-wound type. For the electric opening/closing mechanism, an additional electric drive source needs to be disposed, making it difficult to miniaturize the mechanism. For the spring-loaded and spring-wound opening/closing mechanisms, a constant driving force cannot be provided, affecting smoothness of closing or unfolding of mobile phones and further affecting user experience.

Document JP 2010252115 A discloses a spring loaded sliding opening/closing mechanism comprising a base plate and a slider plate.

### SUMMARY

This application provides a sliding opening/closing mechanism and an electronic device, to enable the sliding opening/closing mechanism to be opened and closed under a stable action force, and to miniaturize the sliding opening/closing mechanism.

According to a first aspect, this application provides a sliding opening/closing mechanism. The sliding opening/closing mechanism may include a base plate, a slider plate, and a first drive assembly. The base plate may include a first side and a second side that are provided opposite to each other in a first direction. The slider plate may be slidably disposed on the base plate in the first direction, the slider plate includes a drive side that is provided facing the second side of the base plate, and the slider plate has a first state in which the slider plate is stacked on the base plate and a second state in which at least part of the slider plate protrudes from the first side of the base plate to the outside of the base plate. The first drive assembly may include a swing rod, a rotating arm, an elastic piece, and a rolling piece, where the swing rod may be rotatably connected to the base plate through a first rotating shaft; one end of the elastic piece may be connected to a part that is of the swing rod and that is located on one side of the first rotating shaft, and the other end may be connected to the base plate; the rotating arm may be disposed on a side that is of the swing rod and that faces the first side of the base plate, and a first end of the rotating arm is rotatably connected to the base plate; and the rolling piece may be clamped among a part that is of the swing rod and that is located on the other side of the first rotating shaft, a second end of the rotating arm, and the drive side of the slider plate. When the slider plate switches from the first state to the second state, the swing rod may rotate under an action of the elastic piece, and push, together with the rotating arm, the rolling piece to move towards the first side of the base plate, so that the rolling piece pushes the slider plate to protrude from the first side of the base plate to the outside. When the slider plate switches from the second state to the first state, the slider plate may push the rolling piece to move towards the second side of the base plate, the rolling piece may push the swing rod and the rotating arm to rotate, and further the swing rod drives the elastic piece into an original position.

In the foregoing solution, when the slider plate switches from the first state to the second state, the swing rod rotates under the action of the elastic piece, and pushes, together with the rotating arm, the rolling piece to move towards the first side of the base plate, so that the rolling piece pushes the slider plate to protrude from the first side of the base plate. In the process, although an action force exerted by the elastic piece on the swing rod decreases gradually due to a decrease in elasticity of the elastic piece, it can be learned, based on structural designs of and relative positional relationships between the components of the first drive assembly and with reference to changes of action forces exerted by the swing rod and the rotating arm on the rolling piece, that an action force exerted on the rolling piece in the first direction changes quite slightly. The action force is roughly equal to a pushing force exerted on the slider plate. For example, in the entire moving process in which the slider plate switches from the first state to the second state, a magnitude of change in the pushing force exerted on the slider plate does not exceed ±10%. It can be learned that the sliding opening/closing mechanism provided in this application can provide stable driving forces for the slider plate, and the sliding opening/closing mechanism can be opened and closed at a relatively constant speed, helping improve users' use experience for an electronic device that uses the sliding opening/closing mechanism. In addition, the sliding opening/closing mechanism in this application is driven in a purely mechanical manner, and there is no need to dispose an additional electric drive source. Therefore, the sliding opening/closing mechanism is relatively small in volume, making it possible to miniaturize an electronic device that uses the sliding opening/closing mechanism.

In some possible implementation solutions, the rolling piece and the swing rod may be in rolling contact. In this way, not only a driving force loss caused by mutual friction between the two components but also wear of the components can be reduced, helping increase a service life of the sliding opening/closing mechanism.

Based on same principles, the rolling piece and the rotating arm may also be in rolling contact, and the rolling piece and the slider plate may also be in rolling contact.

In some possible implementation solutions, the drive side of the slider plate may have a first protrusion, the first protrusion has a first slope that is inclined relative to the first side of the base plate, and the rolling piece is disposed in contact with the first slope. When the slider plate switches from the first state to the second state, the rolling piece may move towards the first side of the base plate along the first slope, pushing the slider plate to slide. On the contrary, when the slider plate switches from the second state to the first state, the rolling piece moves towards the second side of the base plate along the first slope, and pushes the swing rod to rotate into an original position.

In some possible implementation solutions, the sliding opening/closing mechanism may further include a stopper plate. The stopper plate may be fastened on the base plate and disposed close to the first side of the base plate. The stopper plate may be configured to press against the first protrusion when the slider plate is in the second state, so as to stop the slider plate at the position.

In some possible implementation solutions, the swing rod may include a first swing arm and a second swing arm, the first swing arm and the second swing arm are connected and disposed at an angle, the first swing arm clamps the rolling piece jointly with the second end of the rotating arm and the drive side of the slider plate, the second swing arm is connected to the elastic piece, and the first rotating shaft may be disposed in a corner portion that is of the swing rod and that is formed by the first swing arm and the second swing arm. In this design, the first drive assembly can implement its drive capabilities at relatively small dimensions, helping reduce an overall volume of the sliding opening/closing mechanism.

**In** the foregoing solution, when the slider plate is in the first state, an opening of the corner portion of the swing rod may be provided facing the second side of the base plate. **In** this way, the first drive assembly can be easily laid out on the base plate, and space occupied by the first drive assembly on the base plate is reduced.

**In** addition, the elastic piece may be disposed on a side that is of the swing rod and that faces the second side of the base plate, and a position at which the elastic piece and the base plate are connected may be provided close to an edge of an end of the second side. **In** this way, the elastic piece obtains large mounting space, and therefore the first drive assembly can provide a sufficient driving force.

**In** some other possible implementation solutions, the swing rod may include a first swing arm and a second swing arm. The first swing arm may clamp the rolling piece j ointly with the second end of the rotating arm and the drive side of the slider plate, an end portion that is of the first swing arm and that is away from the rolling piece may be provided with a first gear, and the first rotating shaft may be specifically disposed at a position close to the end portion of the first swing arm. The second swing arm may include a fastening portion, and a first lug and a second lug that are provided on the fastening portion, the fastening portion is rotatably connected to the base plate, an end portion of the first lug may be connected to the elastic piece, the second lug may be provided with a second gear, and the second gear engages with the first gear. **In** this way, the first swing arm is connected to the second swing arm in a transmission manner.

**In** the foregoing solution, one end of the elastic piece is disposed facing the first side of the base plate, and the other end is disposed facing the second side of the base plate. **In** this way, the first drive assembly can be easily laid out on the base plate, and space occupied by the first drive assembly on the base plate is reduced.

**In** some possible implementation solutions, a length of the first swing arm may be greater than a length of the second swing arm. **In** this way, when the swing rod rotates around the first rotating shaft, a distance an end portion of the first swing arm moves is greater than a distance the end portion of the second swing arm moves. **In** other words, effect of amplifying a distance moved is implemented. With the amplification effect, to enable the first swing arm to drive the slider plate to move a large distance, the second swing arm only needs to move a small distance under pulls from the elastic piece. This helps reduce dimensions of the first drive assembly.

**In** some possible implementation solutions, the first swing arm may be provided with a dowel, the rotating arm may be provided with a sliding groove, and the dowel may be slidably disposed in the sliding groove. With the dowel fitting with the sliding groove, when the swing rod rotates, the rotating arm may rotate synchronously, implementing synchronization between motion of the swing rod and motion of the rotating arm, and further improving structural stability and reliability of the first drive assembly.

**In** some other possible implementation solutions, the rolling piece may be hinged to the second end of the rotating arm. **In** this way, a stable connection can be formed between the rotating arm and the rolling piece, and therefore structural stability of the first drive assembly can also be improved.

**In** some possible implementation solutions, the rolling piece may be a disc. In this case, the first swing arm may be provided with a rolling groove, and the disc may be partially fitted in the rolling groove. **In** this way, with guiding effect provided by the rolling groove, reliability of force transfer between the rolling piece and the swing rod can be improved.

Likewise, the second end of the rotating arm may also be provided with a rolling groove, and the drive side of the slider plate may also be provided with a rolling groove. **In** this case, the rolling piece may also be partially fitted in the rolling grooves of the rotating arm and the slider plate, so that the swing rod, the rotating arm, and the slider plate can securely clamp the rolling piece, improving structural stability of the first drive assembly.

**In** some possible implementation solutions, the disc may include a body and an annular portion that is provided around the body, a thickness of the annular portion is less than a thickness of the body, and the annular portion may be fitted in the rolling groove. **In** this way, the swing rod, the rotating arm, and the slider plate can fit with the rolling piece at a relatively small thickness, helping reduce the overall volume of the sliding opening/closing mechanism.

**In** some possible implementation solutions, the base plate may further include a third side and a fourth side that are provided opposite to each other, and the third side and the fourth side of the slider plate each may be provided with a guide rail. The slider plate may be provided with guide grooves that respectively correspond to the two guide rails, and the guide grooves are slidably disposed on the corresponding guide rails. **In** this way, the slider plate can slide relative to the base plate.

**In** addition, when being specifically provided, the guide grooves may be provided beyond the drive side of the slider plate. **In** this way, a length for which the slider plate slidably fits with the base plate can be increased, thereby improving reliability of connection between the slider plate and the base plate.

**In** some possible implementation solutions, the sliding opening/closing mechanism may further include a locking structure. The locking structure may be fastened on the base plate and configured to lock the slider plate into the first state. **In** this way, the electronic device using the sliding opening/closing mechanism is prevented from being mistakenly opened or closed.

**In** some possible implementation solutions, the sliding opening/closing mechanism may further include a supporting plate. The supporting plate may be disposed on a side that is of the base plate and that is away from the slider plate, and is configured to support the base plate and components disposed on the base plate.

In addition, the base plate may further include a wing-shaped structure. The wing-shaped structure may be fastened on the second side of the base plate to reinforce part of the base plate. When being specifically disposed, the wing-shaped structure includes a main body portion, and a first wing and a second wing that are located on two sides of the main body portion. The first wing may extend to the third side of the base plate and be fastened to the base plate. The second wing may extend to the fourth side of the base plate and be fastened to the base plate.

In some possible implementation solutions, the sliding opening/closing mechanism may further include a second drive assembly. The second drive assembly and the first drive assembly may be symmetrically disposed with respect to an axis of symmetry that is set in the first direction. In this way, sufficient driving forces can be provided for the slider plate, and a balance between forces exerted on the slider plate can also be maintained.

According to a second aspect, this application further provides an electronic device. The electronic device may include a housing, a flexible display, and the sliding opening/closing mechanism in any one of the possible implementation solutions in the first aspect. The base plate may be fastened on the housing. The slider plate is disposed on a side that is of the base plate and that is away from the housing. The flexible display is fastened to the slider plate. When the slider plate is in the first state, one part of the flexible display may cover the slider plate, and the other part may be accommodated in the housing. When the slider plate is in the second state, the flexible display may contiguously cover the base plate and the slider plate. In this way, the sliding opening/closing mechanism of the electronic device can provide stable driving forces for the slider plate, so that the electronic device can switch between a closed state and an unfolded state at a relatively stable speed, effectively improving users' use experience.

In some possible implementation solutions, a roller may be disposed in the housing, the roller may be disposed close to the second side of the base plate, a rotating axis of the roller is perpendicular to the first direction, and the flexible display may be fastened to the slider plate after bypassing the roller. The roller can guide and support motion of the flexible display, thereby improving reliability of motion of the flexible display during unfolding or closing of the electronic device.

### BRIEF DESCRIPTION OF DRAWINGS

FIG. 1 is a diagram of a structure of an electronic device according to an embodiment of this application;
FIG. 2 is a diagram of a structure of an electronic device when a slider plate is in a second state according to an embodiment of this application;
FIG. 3 is a diagram of a structure of a flexible display when an electronic device is in a closed state according to an embodiment of this application;
FIG. 4 is a diagram of a structure of a sliding opening/closing mechanism according to an embodiment of this application;
FIG. 5 is an exploded view of a structure of a sliding opening/closing mechanism shown in FIG. 4;
FIG. 6 is a diagram of a partial structure of a sliding opening/closing mechanism shown in FIG. 5;
FIG. 7 is a diagram of a structure of a sliding opening/closing mechanism shown in FIG. 4 when a slider plate is in a first state;
FIG. 8 is a diagram of a structure of a sliding opening/closing mechanism shown in FIG. 4 when a slider plate is in an intermediate state;
FIG. 9 is a diagram of a structure of a sliding opening/closing mechanism shown in FIG. 4 when a slider plate is in a second state;
FIG. 10 is a diagram of analysis of a distance a sliding opening/closing mechanism shown in FIG. 4 is driven;
FIG. 11 is a diagram of analysis of forces exerted on parts of a swing rod and a rolling piece shown in FIG. 10;
FIG. 12 is a diagram of analysis of forces exerted on parts of an elastic piece and a swing rod in FIG. 10;
FIG. 13a is a diagram of analysis of forces exerted on parts of a rolling piece and a slider plate when the slider plate is in a first state;
FIG. 13b is a diagram of analysis of forces exerted on parts of a rolling piece and a slider plate when the slider plate is in an intermediate state;
FIG. 13c is a diagram of analysis of forces exerted on parts of a rolling piece and a slider plate when the slider plate is in a second state;
FIG. 14 is a diagram of a structure of another sliding opening/closing mechanism when a slider plate is in a first state according to an embodiment of this application;
FIG. 15 is a diagram of a structure of another sliding opening/closing mechanism when a slider plate is in an intermediate state according to an embodiment of this application;
FIG. 16 is a diagram of a structure of another sliding opening/closing mechanism when a slider plate is in a second state according to an embodiment of this application;
FIG. 17 is a diagram of a structure of still another sliding opening/closing mechanism when a slider plate is in a first state according to an embodiment of this application;
FIG. 18 is a diagram of a structure of still another sliding opening/closing mechanism when a slider plate is in an intermediate state according to an embodiment of this application; and
FIG. 19 is a diagram of a structure of still another sliding opening/closing mechanism when a slider plate is in a second state according to an embodiment of this application.

### Reference numerals:

1-housing; 11-roller;
2-flexible display;
3-sliding opening/closing mechanism; 31-base plate; 311-first side of the base plate; 312-second side of the base plate; 313-third side of the base plate;
314-fourth side of the base plate; 315-hollow region; 316-wing-shaped structure; 3161-main body portion; 3162-first wing; 3163-second wing;
317-guide rail; 32-slider plate; 321-drive side; 3211-first protrusion; 32111-first slope; 3212-second protrusion;
32121-second slope; 322-guide groove; 323-notch; 33-first drive assembly; 331-swing rod; 3311-first swing arm;
33111-dowel; 33112-groove; 33113-first gear; 3312-second swing arm; 33121-fastening portion; 33122-first lug;
33123-second lug; 33124-second gear; 3313-first rotating shaft; 3314-second rotating shaft; 332-rotating arm;
3321-first end of the rotating arm; 3322-second end of the rotating arm; 3323-sliding groove; 3324-protruding portion; 3325-extension portion;
33251-pin shaft; 333-elastic piece; 3331-first connecting portion; 3332-second connecting portion; 334-rolling piece; 3341-body;
3342-annular portion; 34-second drive assembly; 3 5-supporting plate; 351-stopper protrusion; 36-stopper plate.

### DESCRIPTION OF EMBODIMENTS

To make objectives, technical solutions, and advantages of this application clearer, the following further describes embodiments of this application in detail with reference to the accompanying drawings. However, example implementations can be implemented in a plurality of forms, and should not be construed as being limited to implementations described herein. Identical reference numerals in the accompanying drawings denote identical or similar structures. Therefore, repeated descriptions thereof are omitted. Expressions of positions and directions in embodiments of this application are described by using the accompanying drawings as examples. However, changes may also be made as required, and all the changes fall within the protection scope of this application. The accompanying drawings in embodiments of this application are merely used to illustrate relative positional relationships and do not represent actual scales.

It should be noted that specific details are set forth in the following description to facilitate understanding of this application. However, embodiments of this application can be implemented in a plurality of manners different from those described herein, and a person skilled in the art can perform similar promotions without departing from the connotation of embodiments of this application. Therefore, this application is not limited to specific implementations disclosed below.

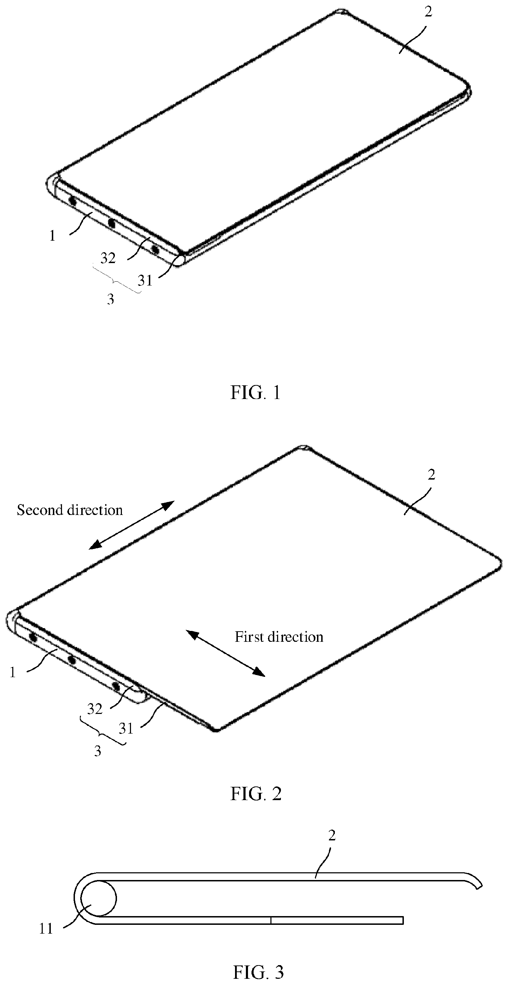

FIG. 1 is a diagram of a structure of an electronic device according to an embodiment of this application. The electronic device may be a mobile phone, a personal digital assistant (personal digital assistant, PDA), a notebook computer, a tablet computer, or another device with a form change function. The electronic device in the embodiment shown in FIG. 1 is described by using a mobile phone as an example.

The electronic device may include a housing 1, a flexible display 2, and a sliding opening/closing mechanism 3. The sliding opening/closing mechanism 3 may include a base plate 31 and a slider plate 32. The base plate 31 is fastened on a side of the housing 1 and encloses the inside of the electronic device together with the housing 1. Some components of the electronic device, such as a circuit board, a battery, a camera module, a telephone receiver, and a microphone, may be disposed inside the electronic device. The slider plate 32 is disposed on a side that is of the base plate 31 and that is away from the housing 1. The slider plate 32 may slide in a first direction relative to the base plate 31. Further, a gap may be formed between an edge of a side of the base plate 31 and a side wall of the housing 1. The gap may extend in a second direction, and communicate the inside of the electronic device with the outside. The flexible display 2 may be partially located inside the electronic device, and partially extend from the gap and cover a surface of a side that is of the slider plate 32 and that is away from the base plate 31. A part that is of the flexible display 2 and that covers the slider plate 32 may be fastened to the slider plate 32. A fastening manner thereof may be, but is not limited to, sticking. It should be noted that the first direction and the second direction may be perpendicular to each other. For example, the first direction may be a width direction of the electronic device, and the second direction may be a length direction of the electronic device.

In this embodiment of this application, the slider plate 32 may have two states: a state in which the slider plate 32 is stacked on the base plate 31 and a state in which the slider plate 32 protrudes from a side of the base plate 31 to the outside. For ease of description, the state in which the slider plate 32 is stacked on the base plate 31 is referred to as a first state and correspondingly the state in which the slider plate 32 protrudes from a side of the base plate 31 to the outside is referred to as a second state below. FIG. 1 is a diagram of a structure of the electronic device when the slider plate 32 is in the first state. In this case, one part of the flexible display 2 may cover the slider plate 32, and the other part may be accommodated in the space formed by the housing 1 and the base plate 31. In other words, the flexible display 2 is partially located outside the electronic device, and is partially hidden inside the electronic device. Therefore, this state may be referred to as a closed state of the electronic device. In this state, a region that is of the flexible display 2 and that is located outside the electronic device may provide display based on a user operation, and a region located inside the electronic device may be turned off through settings.

FIG. 2 is a diagram of a structure of the electronic device when the slider plate 32 is in the second state. In this case, the slider plate 32 slides out and protrudes to the outside of the base plate 31, drives the flexible display 2 to extend to the outside of the base plate 31 together, and pulls out the part that is of the flexible display 2 and that is accommodated in the electronic device, so that the base plate 31 and the slider plate 32 jointly support the flexible display 2. This state may be referred to as an unfolded state of the electronic device. In this state, the flexible display 2 may contiguously cover the base plate 31 and the slider plate 32, and the flexible display 2 may provide display on an entire region that covers the base plate 31 and the slider plate 32.

FIG. 3 is a diagram of a structure of the flexible display when the electronic device is in the closed state according to an embodiment of this application. With reference to FIG. 1 to FIG. 3, in this embodiment of this application, a roller 11 may be disposed in the housing 1, the roller 11 is disposed close to the gap formed by the housing 1 and the base plate 31, and a rotating axis of the roller 11 may also extend in the second direction. In this case, the flexible display 2 may come out of the gap and extend to the outside after bypassing the roller 11. When the electronic device is unfolded or closed, the flexible display 2 and the roller 11 are in a static friction state. In other words, the flexible display 2 and the roller 11 are in pure rolling contact. In this way, without causing wear to the flexible display 2, motion of the flexible display 2 can be guided and supported by the roller 11, thereby improving reliability of motion of the flexible display 2 during unfolding or closing of the electronic device.

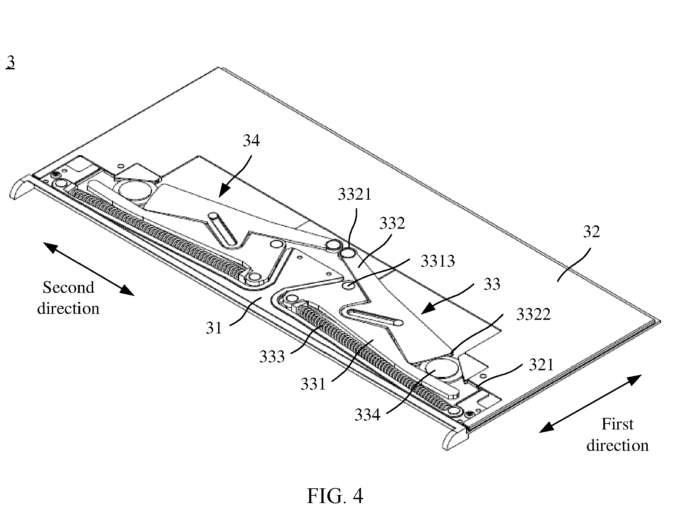

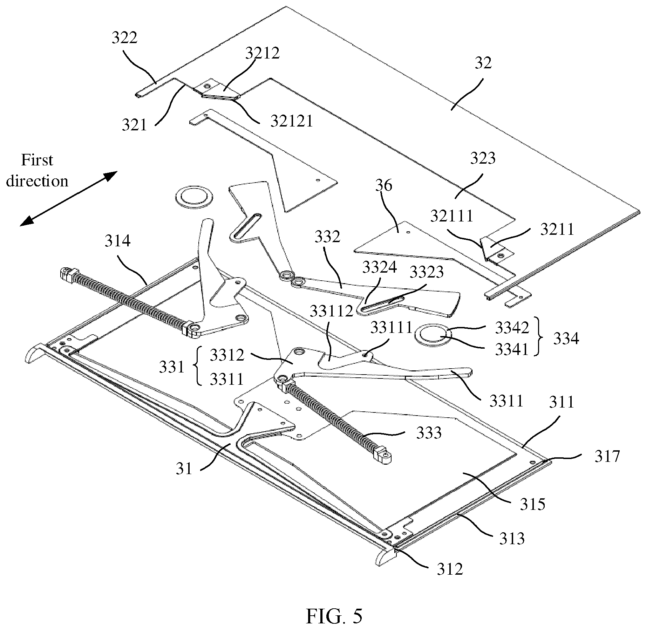

FIG. 4 is a diagram of a structure of a sliding opening/closing mechanism 3 according to an embodiment of this application, and FIG. 5 is an exploded view of a structure of the sliding opening/closing mechanism 3 shown in FIG. 4. In this embodiment of this application, in addition to the base plate 31 and the slider plate 32 mentioned above, the sliding opening/closing mechanism 3 may further include a drive assembly, to drive the slider plate 32 to slide relative to the base plate 31, so that the slider plate 32 can switch between the first state and the second state, thereby implementing switching of the electronic device between the closed state and the unfolded state. The base plate 31 is roughly rectangular in shape, and includes a first side 311 and a second side 312 that are provided opposite to each other in the first direction, and a third side 313 and a fourth side 314 that are provided opposite to each other in the second direction. When being driven by the drive assembly, the slider plate 32 may specifically protrude from the first side 311 of the base plate 31 to the outside. Together with the side wall of the housing, the second side 312 of the base plate 31 may form the gap that allows the flexible display to come out. The slider plate 32 includes a drive side 321 that is provided facing the second side 312 of the base plate 31. The drive assembly may be specifically located between the second side 312 of the base plate 31 and the drive side 321 of the slider plate 32.

To improve reliability of driving the slider plate 32, there may be two drive assemblies. The two drive assemblies are symmetrically disposed with respect to an axis of symmetry that is set in the first direction. In this way, sufficient driving forces can be provided for the slider plate 32, and a balance between forces exerted on the slider plate 32 can also be maintained. For ease of distinguishing, the two drive assemblies are referred to as a first drive assembly 33 and a second drive assembly 34 below, respectively. The first drive assembly 33 is disposed close to the third side 313 of the base plate 31, and the second drive assembly 34 is disposed close to the fourth side 314 of the base plate 31. In the following embodiments of this application, the sliding opening/closing mechanism 3 is described mainly by using a specific disposing manner of the first drive assembly 33 as an example. The second drive assembly 34 may be disposed with reference to the first drive assembly 33. It should be noted that design of the second drive assembly 34 may be identical to that of the first drive assembly 33, or reference may be made only to components included in the first drive assembly 33 and connection relationships, and other parameters may be adaptively adjusted, and are not required to be completely the same.

In this embodiment of this application, the first drive assembly 33 may include a swing rod 331, a rotating arm 332, an elastic piece 333, and a rolling piece 334. The swing rod 331 may be rotatably connected to the base plate 31 through a first rotating shaft 3313. One end of the elastic piece 333 is fastened to a part that is of the swing rod 331 and that is located on one side of the first rotating shaft 3313, and the other end is fastened to the base plate 31. The rotating arm 332 may be disposed on a side that is of the swing rod 331 and that faces the first side 311 of the base plate 31. The rotating arm 332 includes a first end 3321 and a second end 3322. The first end 3321 of the rotating arm 332 is rotatably connected to the base plate 31. The rolling piece 334 may be clamped among a part that is of the swing rod 331 and that is located on the other side of the first rotating shaft 3313, the second end 3322 of the rotating arm 332, and the drive side 321 of the slider plate 32. In this way, when the slider plate 32 switches from the first state to the second state, a stretched/compressed state of the elastic piece 333 changes. When being deformed, the elastic piece 333 exerts a specific elastic force on the swing rod 331. The swing rod 331 may rotate counterclockwise under an action of the elastic force exerted by the elastic piece 333, and push, together with the rotating arm 332, the rolling piece 334 to move towards the first side 311 of the base plate 31. The rolling piece 334 may further transfer the linear displacement to the slider plate 32, pushing the slider plate 32 to protrude from the first side 311 of the base plate 31. On the contrary, when the slider plate 32 switches from the second state to the first state, the slider plate 32 may slide towards the second side 312 of the base plate 31 after a user performs a manual operation, pushing the rolling piece 334, so that the rolling piece 334 is also displaced in the direction. In this case, when being pushed by the rolling piece 334, the swing rod 331 and the rotating arm 332 may rotate, and when being driven by the swing rod 331, the elastic piece 333 also returns to an original stretched state.

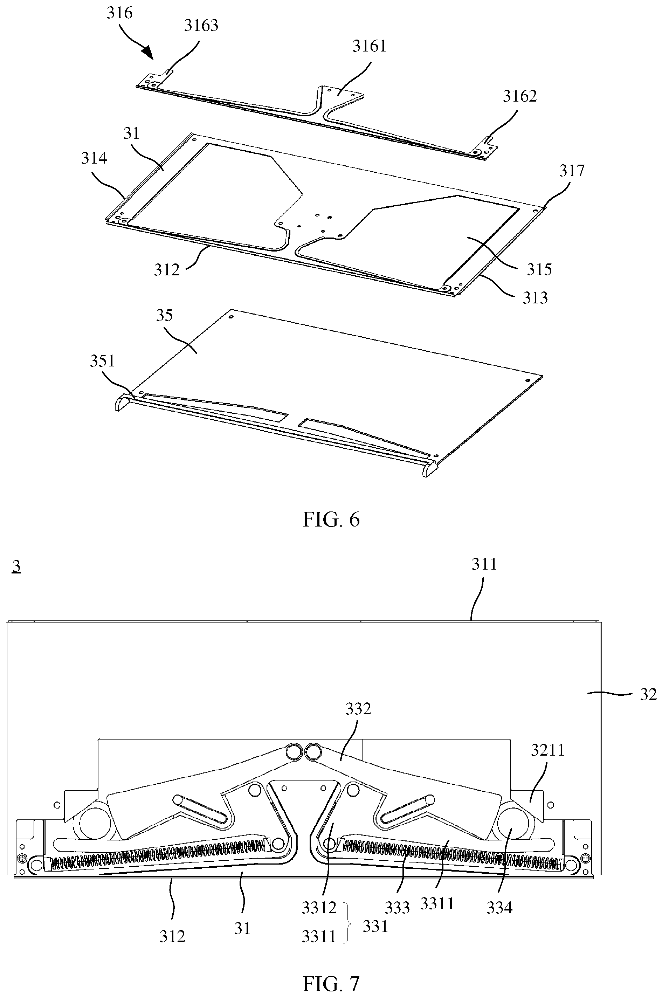

FIG. 6 is a diagram of a partial structure of a sliding opening/closing mechanism 3 shown in FIG. 5. As shown in FIG. 5 and FIG. 6, in this embodiment of this application, the sliding opening/closing mechanism 3 may further include a supporting plate 35. The supporting plate 35 may be disposed on a side that is of the base plate 31 and that is away from the slider plate 32, and is configured to support the base plate 31 of the sliding opening/closing mechanism 3 and components disposed on the base plate 31. The base plate 31 may be partially hollowed out to reduce a weight. For example, the base plate 31 shown in FIG. 6 has two hollow regions 315 that are symmetrically provided. The two hollow regions 315 are provided close to the third side 313 and the fourth side 314 of the base plate 31, respectively. In addition, the base plate 31 may further include a wing-shaped structure 316. The wing-shaped structure 316 may be fastened on the second side 312 of the base plate 31 to reinforce the base plate 31. The wing-shaped structure 316 includes a main body portion 3161, and a first wing 3162 and a second wing 3163 that are located on two sides of the main body portion 3161. The main body portion 3161 may be fastened to a region that is on the base plate 31 and that is located between the two hollow regions 315. The first wing 3162 extends to the third side 313 of the base plate 31 and is fastened to the base plate 31. The second wing 3163 extends to the fourth side 314 of the base plate 31 and is fastened to the base plate 31.

The third side 313 and the fourth side 314 of the base plate 31 each are provided with a guide rail 317. The slider plate 32 is provided with guide grooves 322 that respectively correspond to the guide rails 317 on the two sides. Each of the guide grooves 322 is slidably fitted on the guide rail 317 on the corresponding side. In this way, the slider plate 32 can slide relative to the base plate 31. In some implementations, the guide grooves 322 on two sides of the slider plate 32 may be both provided beyond the drive side 321 of the slider plate 32. In this way, a length for which the slider plate 32 slidably fits with the base plate 31 can be increased. After the slider plate 32 slides towards the outside of the base plate 31 and protrudes, parts that are of the guide grooves 322 and that extend beyond the drive side 321 can still stably fit on the guide rails 317 of the base plate 31. Therefore, reliability of connection between the slider plate 32 and the base plate 31 can be improved. In addition, a stopper protrusion 351 may be provided on a side that is of the supporting plate 35 and that corresponds to the second side 312 of the base plate 31. After the base plate 31 is disposed on the supporting plate 35, the stopper protrusion 351 protrudes from a surface of the side that is of the base plate 31 and on which the slider plate 32 is mounted. When the slider plate 32 is in the first state, the guide grooves 322 of the slider plate 32 may press against the stopper protrusion 351.

In some embodiments, the drive side 321 of the slider plate 32 may have a notch 323 that is provided in a center. The notch 323 may avoid the two drive assemblies on two sides, providing sufficient mounting space for the drive assemblies. In addition, the drive side 321 of the slider plate 32 may further have a first protrusion 3211 and a second protrusion 3212. The first protrusion 3211 and the second protrusion 3212 may be respectively provided in two corners that are formed by the notch 323 on the drive side 321. The first protrusion 3211 has a first slope 32111 that is inclined relative to the first side 311 of the base plate 31. The second protrusion 3212 has a second slope 32121 that is inclined relative to the first side 311 of the base plate 31. In a specific implementation, the rolling piece 334 of the first drive assembly 33 may be disposed in contact with the first slope 32111 of the first protrusion 3211, and a rolling piece 334 of the second drive assembly 34 may be disposed in contact with the second slope 32121 of the second protrusion 3212. When the slider plate 32 switches from the first state to the second state, the rolling piece 334 of the first drive assembly 33 moves towards the first side 311 of the base plate 31 along the first slope 32111, the rolling piece 334 of the second drive assembly 34 moves towards the first side 311 of the base plate 31 along the second slope 32121, and the two rolling pieces 334 jointly push the slider plate 32 to slide. When the slider plate 32 switches from the second state to the first state, the rolling piece 334 of the first drive assembly 33 moves towards the second side 312 of the base plate 31 along the first slope 32111, and pushes the swing rod 331 of the first drive assembly 33 to rotate clockwise into an original position, and the rolling piece 334 of the second drive assembly 34 moves towards the second side 312 of the base plate 31 along the second slope 32121, and pushes a swing rod 331 of the second drive assembly 34 to rotate counterclockwise into an original position.

A structural form of the rolling piece 334 is not limited. For example, the structural form of the rolling piece 334 includes but is not limited to a disc structure shown in FIG. 5. In a specific implementation, the rolling piece 334 and the slider plate 32 may be in a static friction state. In other words, when the slider plate 32 switches between the first state and the second state, the rolling piece 334 and the slider plate 32 are in pure rolling contact. In this way, not only a driving force loss caused by mutual friction between the two components but also wear of the components can be reduced, helping increase a service life of the sliding opening/closing mechanism 3. Likewise, the rolling piece 334 and the swing rod 331 may be in pure rolling contact, and the rolling piece 334 and the rotating arm 332 may be in pure rolling contact. Details are not described herein again.

For a purpose of improving reliability of contact between the rolling piece 334 and the slider plate 32, the first slope 32111 of the first protrusion 3211 may be further provided with a rolling groove, and the rolling piece 334 of the first drive assembly 33 may be partially fitted in the rolling groove. When the slider plate 32 slides, the rolling piece 334 may roll in the rolling groove of the first protrusion 3211. In this way, with guiding effect provided by the rolling groove, reliability of force transfer between the rolling piece 334 and the slider plate 32 is improved. Likewise, the second slope 32121 of the second protrusion 3212 may also be provided with a rolling groove, and the rolling piece 334 of the second drive assembly 34 may be partially fitted in the rolling groove, thereby improving reliability of force transfer between the rolling piece 334 of the second drive assembly 34 and the slider plate 32.

Likewise, the swing rod 331 and the second end of the rotating arm 332 may also be provided with a rolling groove, respectively. In this case, a peripheral side of the rolling piece 334 may be fitted in the rolling groove of the swing rod 331, in the rolling groove of the rotating arm 332, and in the rolling groove of the drive side 321 of the slider plate 32. In this way, the swing rod 331, the rotating arm 332, and the slider plate 32 can securely clamp the rolling piece 334, improving structural stability of the drive assembly. In a specific design, the rolling piece 334 may include a body 3341 and an annular portion 3342 that is provided around the body 3341, and a thickness of the annular portion 3342 is less than a thickness of the body 3341. In this case, the annular portion 3342 on the peripheral side may be fitted in the rolling groove of the swing rod 331, in the rolling groove of the rotating arm 332, and in the rolling groove of the slider plate 32. In this design, the swing rod 331, the rotating arm 332, and the slider plate 32 can fit with the rolling piece 334 at a relatively small thickness, helping reduce an overall volume of the sliding opening/closing mechanism 3.

In some embodiments, the sliding opening/closing mechanism 3 may further include a locking structure. The locking structure may be disposed on the base plate 31. The locking structure may be configured to lock the slider plate 32 into the first state when being closed, and to enable the slider plate 32 to slide relative to the base plate 31 when being opened, preventing the electronic device from being mistakenly opened or closed. For example, the locking structure may be a spring-loaded opening/closing structure or a snap-on structure. When a user pulls the slider plate 32 outwards, the user can overcome a locking force of the locking structure and force the locking structure to open, and the slider plate 32 slides under an action of the elastic piece 333 and protrudes from the first side 311 of the base plate 31. After a user pushes the slider plate 32 back to the second side 312 of the base plate 31, the locking structure closes automatically and locks the slider plate 32. Alternatively, in some other implementations, a button for operating the locking structure may be provided on a surface of the outside of the electronic device. A user may tap the operation button to open the locking structure. The locking structure is a well-known and common design in this field. Therefore, a specific manner of disposing the locking structure is not described herein.

In some embodiments, the sliding opening/closing mechanism 3 may further include stopper plates 36. The stopper plates 36 may be fastened on the base plate 31 and disposed close to the first side 311 of the base plate 31. When the slider plate 32 switches from the first state to the second state and when the slider plate 32 slides to a specific position, the stopper plates 36 may press against the first protrusion 3211 and the second protrusion 3212 on the drive side 321 of the slider plate 32, to stop the slider plate 32 at the position. It can be understood that the position is a position at which the slider plate 32 is located when being in the second state.

Still with reference to FIG. 4 and FIG. 5, in this embodiment of this application, the swing rod 331 may include a first swing arm 3311 and a second swing arm 3312 that are connected. The first swing arm 3311 and the second swing arm 3312 are disposed at an angle at a joint, and the angle may range from 0° to 180°. In this case, the first swing arm 3311 may clamp the rolling piece 334 jointly with the second end of the rotating arm 332 and the drive side of the slider plate 32. An end portion that is of the second swing arm 3312 and that is away from the first swing arm 3311 may be connected to the elastic piece 333. The first rotating shaft that is configured to rotatably connect the swing rod 331 to the base plate may be disposed in a corner portion of the swing rod 331. In this case, the swing rod 331 is approximately a hook-shaped bent structure. In this design, the drive assembly can implement its drive capabilities at relatively small dimensions, helping reduce the overall volume of the sliding opening/closing mechanism 3.

When the slider plate 32 is in the first state, an opening of the corner portion of the swing rod 331 may be provided facing the second side 312 of the base plate 31. This facilitates laying-out of the first drive assembly 33 and the second drive assembly 34 between the drive side 321 of the slider plate 32 and the second side 312 of the base plate 31, and avoids crossover between components of the first drive assembly 33 and the second drive assembly 34. In this case, the elastic piece 333 of each of the two drive assemblies may be disposed on a side that is of the swing rod 331 of the corresponding drive assembly and that faces the second side 312 of the base plate 31. One end of the elastic piece 333 of the first drive assembly 33 is connected to the end portion of the second swing arm 3312 of the first drive assembly 33, and a position at which the other end and the base plate 31 are connected is provided away from the second drive assembly 34. One end of the elastic piece 333 of the second drive assembly 34 is connected to an end portion of a second swing arm 3312 of the second drive assembly 34, and a position at which the other end and the base plate 31 are connected is provided away from the first drive assembly 33. In this design, the elastic pieces 333 can obtain relatively large mounting space, and therefore the drive assemblies can provide sufficient driving forces. For example, the elastic piece 333 of the first drive assembly 33 may be connected to the base plate 31 by the first wing 3162 of the wing-shaped structure 316 shown in FIG. 6, and the elastic piece 333 of the second drive assembly 34 may be connected to the base plate 31 by the second wing 3163 of the wing-shaped structure 316. In this way, the positions at which the elastic pieces 333 and the base plate 31 are connected are reinforced by the wing-shaped structure, improving structural strength of the sliding opening/closing mechanism 3.

In some embodiments, the first swing arm 3311 may be provided with a dowel 33111, the rotating arm 332 is provided with a sliding groove 3323, and the dowel 33111 may be slidably disposed in the sliding groove 3323. With the sliding groove 3323 fitting with the dowel 33111, when the swing rod 331 rotates, the rotating arm 332 may rotate synchronously, implementing synchronization between motion of the swing rod 331 and motion of the rotating arm 332. In this way, the rolling piece 334 can be securely confined among the first swing arm 3311, the rotating arm 332, and the slider plate 32 in an entire process of motion, improving structural stability and reliability of the drive assembly. For example, the first swing arm 3311 may be provided with a groove 33112, and the dowel 33111 may be disposed on a bottom wall of the groove 33112. Correspondingly, a side that is of the rotating arm 332 and that faces the first swing arm 3311 may be provided with a protruding portion 3324, and the sliding groove 3323 may be specifically provided in the protruding portion 3324. In this way, when the dowel 33111 slides in the sliding groove 3323, the protruding portion 3324 may also slide in and out in the groove 33112, further improving fluidity of relative motion between the swing rod 331 and the rotating arm 332.

Certainly, in some other implementations, the rotating arm 332 may be alternatively provided with a dowel, and correspondingly, the first swing arm 3311 is provided with a groove. In this way, synchronization between motion of the swing rod 331 and motion of the rotating arm 332 can also be achieved.

In addition, a length of the first swing arm 3311 of the swing rod 331 may be greater than a length of the second swing arm 3312 of the swing rod 331. In this way, the swing rod 331 can achieve specific effect of amplifying a distance moved. In other words, when the swing rod 331 rotates around the first rotating shaft, a distance an end portion of the first swing arm 3311 moves is greater than a distance the end portion of the second swing arm 3312 moves. The distance the end portion of the first swing arm 3311 moves directly determines a distance the rolling piece 334 moves and further determines a distance the slider plate 32 slides. With the amplification effect, to enable the first swing arm 3311 to drive the slider plate 32 to move a large distance, the second swing arm 3312 only needs to move a small distance under pulls from the elastic piece 333. In this way, requirements for the elastic piece 333 can be reduced. In addition, this can help reduce dimensions of the drive assemblies, reducing space occupied by the drive assemblies.

In this embodiment of this application, a specific form of the elastic piece 333 is not limited. For example, the form of the elastic piece 333 includes but is not limited to a spring shown in FIG. 5. The elastic piece 333 may be designed as follows: When the slider plate 32 is in the first state, the elastic piece 333 is in a stretched state in which energy is stored. In this case, the swing rod 331 tends to rotate counterclockwise under the action of the elastic force exerted by the elastic piece 333. Therefore, the slider plate 32 can be locked by the locking structure, so that the electronic device can remain in the closed state. After a user opens the locking structure, the elastic piece 333 gradually retracts from the stretched state and drives the swing rod 331 to rotate counterclockwise, and the rolling piece 334 then drives the slider plate 32 to move, so that the slider plate 32 protrudes from the first side 311 of the base plate 31 to the outside until the first protrusion 3211 and the second protrusion 3212 press against the stopper plates 36 and stop the slider plate 32 at the position corresponding to the second state. In this case, the elastic piece 333 may still be in a stretched state in which partial energy is stored. In other words, in this case, the elastic piece 333 can still exert a specific elastic force on the swing rod 331. The elastic force may be further transferred to the slider plate 32 through the rolling piece 334, and provides the slider plate 32 with specific effect of resisting an external force in an opposite direction. In this way, a risk that the slider plate 32 slides back towards the base plate 31 due to an accidental touch is reduced, and structural stability of the electronic device in the unfolded state is improved. In addition, this allows a user to obtain an obvious operating feel when closing the electronic device, helping improve users' use experience.

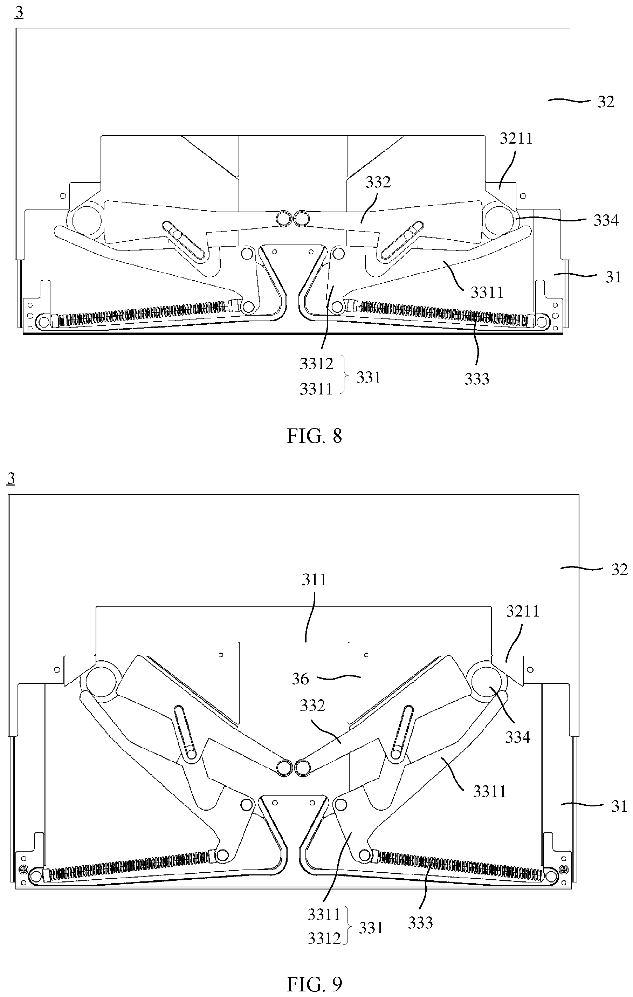

The following describes specific opening and closing processes of the sliding opening/closing mechanism 3 still by using a driving process of the first drive assembly 33 as an example. FIG. 7 is a diagram of a structure of the sliding opening/closing mechanism 3 shown in FIG. 4 when the slider plate 32 is in the first state, FIG. 8 is a diagram of a structure of the sliding opening/closing mechanism 3 shown in FIG. 4 when the slider plate 32 is in an intermediate state, and FIG. 9 is a diagram of a structure of the sliding opening/closing mechanism 3 shown in FIG. 4 when the slider plate 32 is in the second state. When the slider plate 32 is switched from the first state to the second state, the locking structure is opened, and the elastic piece 333 gradually retracts from a stretched state and releases stored elastic potential energy, pulling the swing rod 331 to rotate counterclockwise. In this case, the rotating arm 332 also rotates counterclockwise synchronously. The first swing arm 3311 of the swing rod 331 and the rotating arm 332 jointly push the rolling piece 334 to move towards the second side 312 of the base plate 31 along the first slope of the first protrusion 3211, pushing the slider plate 32 to protrude from the first side 311 of the base plate 31 to the outside. When the slider plate 32 slides to the position at which the first protrusion 3211 presses against the stopper plate 36, the slider plate 32 is switched to the second state. When the slider plate 32 is switched from the second state to the first state, the slider plate 32 is pushed to slide towards the second side 312 of the base plate 31. The slider plate 32 pushes the rolling piece 334 to move towards the second side 312 of the base plate 31 along the first slope of the first protrusion 3211, and further drives the swing rod 331 and the rotating arm 332 to synchronously rotate clockwise. The elastic piece 333 gradually stretches under pulls from the second swing arm 3312 of the swing rod 331. When the slider plate 32 slides to a position at which the guide grooves 322 on the two sides of the slider plate 32 are in contact with the stopper protrusion 351 on the supporting plate 35 shown in FIG. 6, the locking structure is closed and locks the slider plate 32 into the first state.

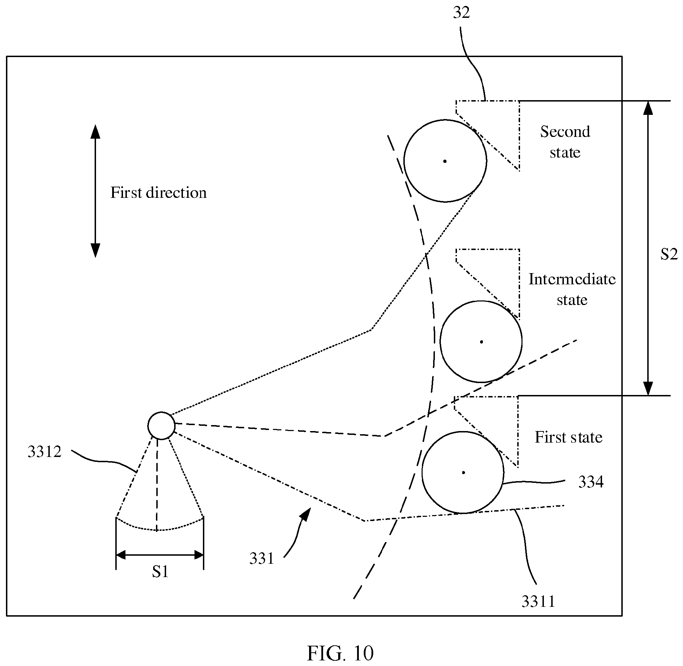

FIG. 10 is a diagram of analysis of a distance a sliding opening/closing mechanism 3 shown in FIG. 4 is driven. It can be learned from FIG. 10 that when the slider plate 32 switches from the first state to the second state, a distance the second swing arm 3312 moves towards a right side under pulls from the elastic piece is S1, and a distance the slider plate 32 moves in the first direction is S2. It can be learned that S2 is far greater than S1. Therefore, in this embodiment of this application, significant effect of amplifying a distance moved is achieved through design of a structure of the swing rod, effectively reducing design dimensions of the drive assembly and further reducing an overall size of the sliding opening/closing mechanism.

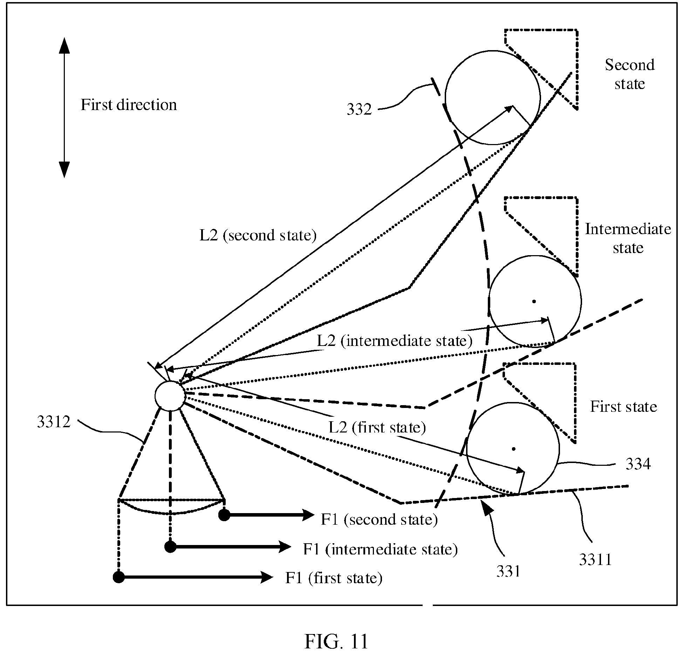

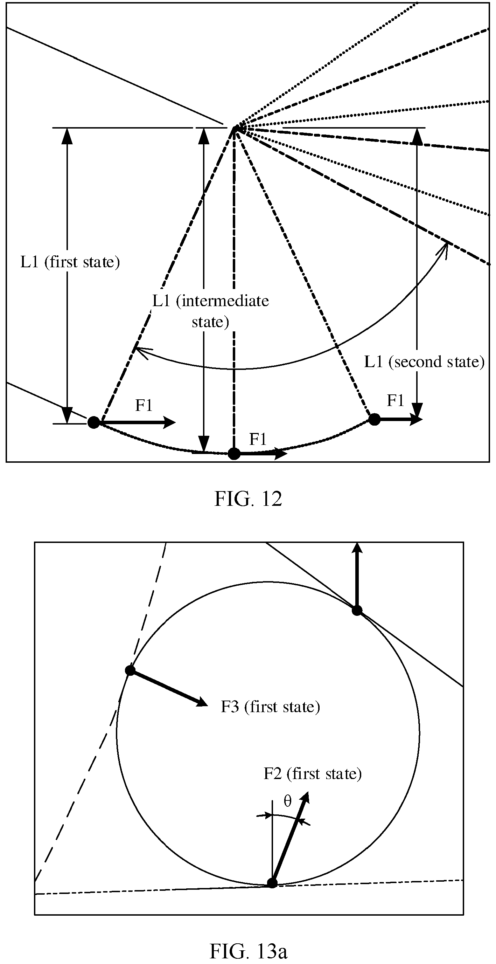

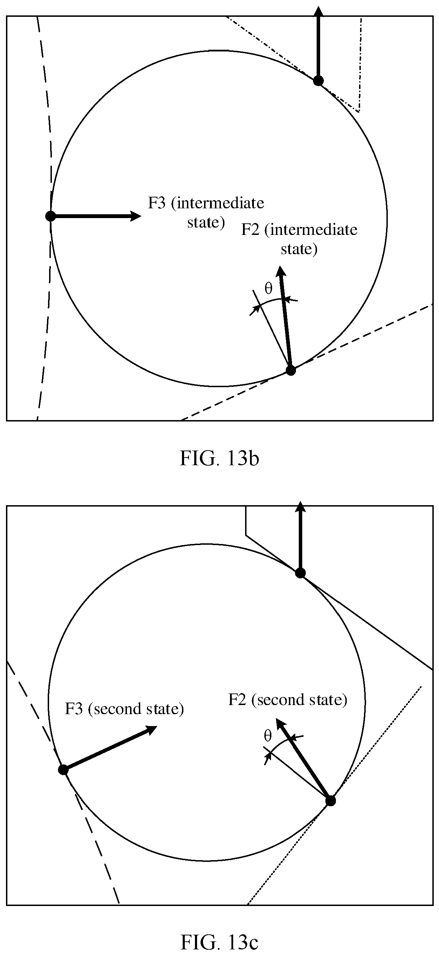

FIG. 11 is a diagram of analysis of forces exerted on parts of a swing rod and a rolling piece 334 in FIG. 10, FIG. 12 is a diagram of analysis of forces exerted on parts of an elastic piece and a swing rod 331 in FIG. 10, and FIG. 13a, FIG. 13b, and FIG. 13c are diagrams of analysis of forces exerted on parts of a rolling piece 334 and a slider plate 32. A pulling force exerted by the elastic piece 333 on the swing rod 331 is defined as F1, with an arm being L1. An action force exerted by the swing rod 331 on the rolling piece 334 is defined as F2, with an arm being L2. Because F1×L1=F2×L2, the action force F2 exerted by the swing rod 331 on the rolling piece 334 can be obtained. When the slider plate 32 switches from the first state to the second state, elasticity of the elastic piece decreases. Therefore, the pulling force F1 exerted by the elastic piece 333 on the swing rod 331 also decreases gradually. The arm L1 of the force exerted by the elastic piece on the swing rod 331 first decreases and then increases, and the arm L2 of the force exerted by the swing rod 331 on the rolling piece 334 increases gradually. Therefore, it can be concluded that the action force F2 exerted by the swing rod 331 on the rolling piece also tends to gradually decrease. With reference to an angle θ at which the swing rod 331 exerts the force on the rolling piece, a component of F2 in the first direction can be derived.

An action force exerted by the rotating arm 332 on the rolling piece is defined as F3. It can be learned that when the slider plate 32 is in the first state, F3 is inclined downwards. In this case, a component of F3 in the first direction and a component of F2 in the first direction are in opposite directions. As the slider plate 32 gradually switches to the second state, the rotating arm 332 rotates counterclockwise, and F3 also becomes inclined upwards gradually. In this case, a component of F3 in the first direction and a component of F2 in the first direction are in a same direction. With reference to the foregoing analysis of F2, it can be learned that, during switching of the slider plate 32 from the first state to the second state, although the action force F1 exerted by the elastic piece 333 on the swing rod 331 decreases gradually due to a decrease in elasticity of the elastic piece 333, with reference to changes of the action forces exerted by the swing rod 331 and the rotating arm 332 on the rolling piece 334, an action force exerted on the rolling piece 334 in the first direction can basically remain unchanged in the moving process. The action force is a pushing force exerted on the slider plate 32 in the moving process. It is verified through analysis that when the slider plate 32 switches from the first state to the second state, a magnitude of change in the pushing force exerted on the slider plate 32 remains within ±10%. Therefore, the sliding opening/closing mechanism provided in this embodiment of this application can provide stable driving forces for the slider plate 32, so that the electronic device can switch from the closed state to the unfolded state at a relatively constant speed, effectively improving users' use experience.

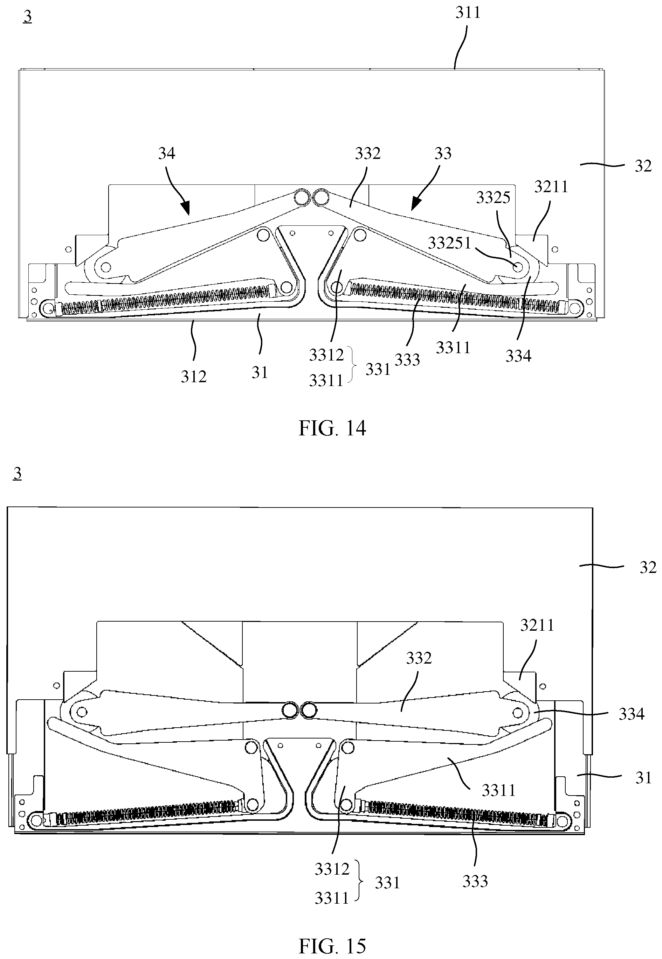

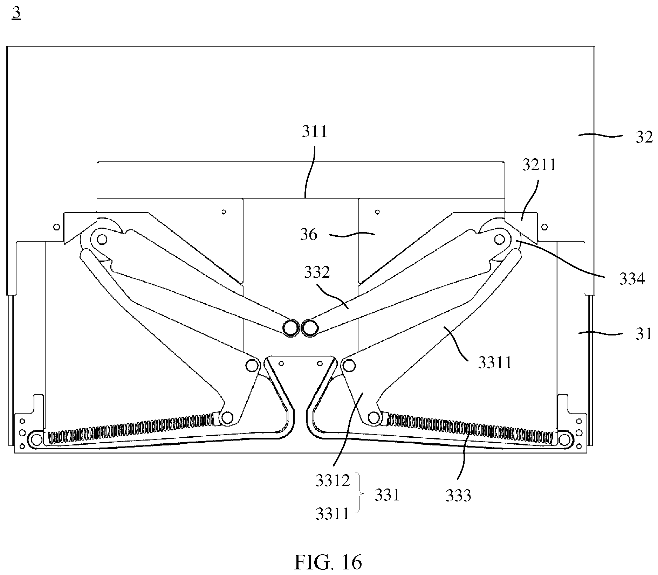

FIG. 14 to FIG. 16 are diagrams of a structure of another sliding opening/closing mechanism 3 according to an embodiment of this application. FIG. 14 is a diagram of a structure of the sliding opening/closing mechanism 3 when the slider plate 32 is in the first state. FIG. 15 is a diagram of a structure of the sliding opening/closing mechanism 3 when the slider plate 32 is in an intermediate state. With reference to FIG. 14 to FIG. 16, in this embodiment, the sliding opening/closing mechanism 3 may also include a supporting plate, a base plate 31, a slider plate 32, a first drive assembly 33, a second drive assembly 34, a locking structure, and a stopper plate 36. Each drive assembly includes a swing rod 331, a rotating arm 332, an elastic piece 333, and a rolling piece 334. Structures and disposing manners of the supporting plate, the base plate 31, the slider plate 32, the locking structure, the stopper plate 36, the swing rod 331, and the elastic piece 333 may be roughly the same as those in the foregoing embodiment. Details about these components are not described herein again. This embodiment is different from the foregoing embodiment in that the rotating arm 332 is hinged to the rolling piece 334.

**In** a specific implementation, a second end of the rotating arm 332 may be provided with an extension portion 3325. The extension portion 3325 covers part of the rolling piece 334. A pin shaft 33251 is disposed in the extension portion 3325. The rolling piece 334 is rotatably disposed at the second end of the rotating arm 332 by the pin shaft 33251. When this design is used, a stable connection can be formed between the rotating arm 332 and the rolling piece 334. When the slider plate 32 switches between the first state and a second state, an end portion that is of the rolling piece 334 and that is at the rotating arm 332 remains in rolling contact with the swing rod 331 and the slider plate 32 while rotating around the pin shaft 33251. Therefore, the swing rod 331, the rotating arm 332, and the slider plate 32 can securely clamp the rolling piece 334, improving structural stability of the drive assembly. **In** addition, because the rolling piece 334 is hinged to the rotating arm 332, the rolling piece 334 and the rotating arm 332 can move synchronously, and because the rolling piece 334 is in direct contact with the swing rod 331, the rolling piece 334 and the swing rod 331 can also move synchronously. **In** this way, the rotating arm 332 and the swing rod 331 can also move synchronously. Therefore, in this embodiment, there may be no need to dispose a structure in which a sliding groove fits with a dowel for the rotating arm 332 and the swing rod 331.

Opening and closing processes of the sliding opening/closing mechanism 3 in this embodiment are basically consistent with those in the foregoing embodiment. Details are not described herein again. **In** addition, when the slider plate 32 switches from the first state to the second state, forces exerted on the rolling piece 334 are also roughly the same as those in the foregoing embodiment. Therefore, the sliding opening/closing mechanism 3 can also provide stable driving forces for the slider plate 32, so that an electronic device can switch from a closed state to an unfolded state at a constant speed, effectively improving users' use experience.

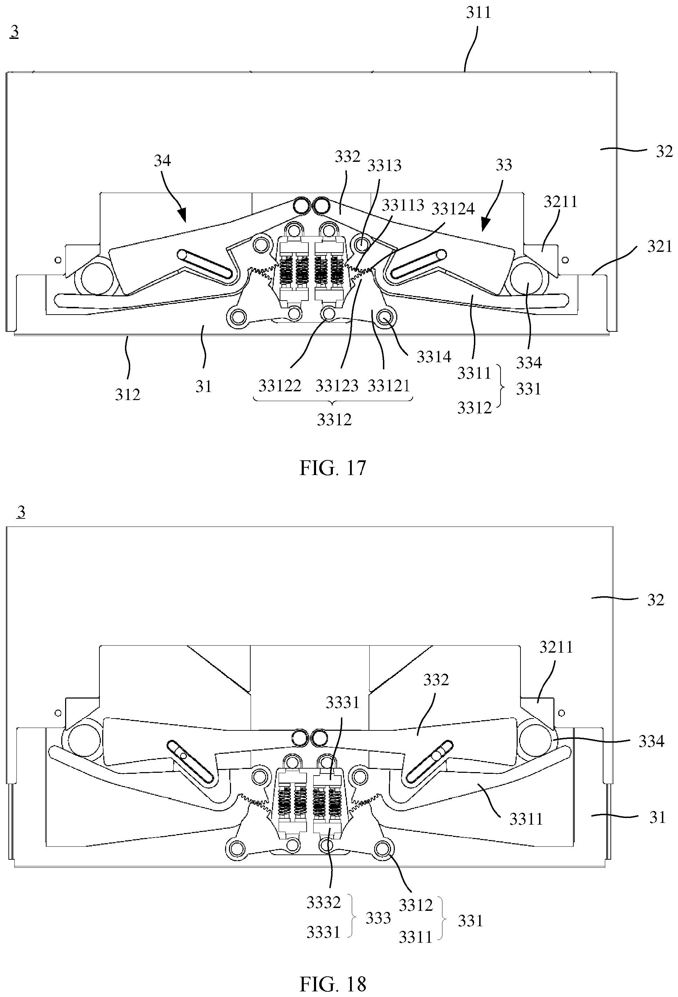

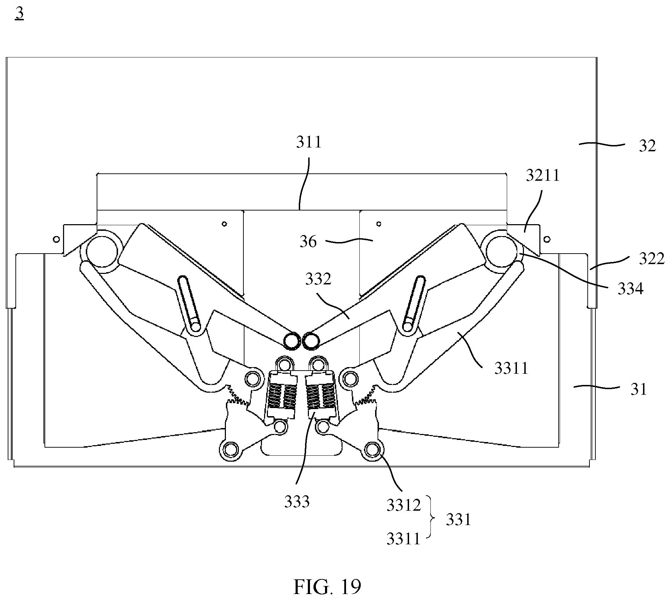

FIG. 17 to FIG. 19 are diagrams of a structure of another sliding opening/closing mechanism according to an embodiment of this application. FIG. 17 is a diagram of a structure of the sliding opening/closing mechanism 3 when the slider plate 32 is in the first state. FIG. 18 is a diagram of a structure of the sliding opening/closing mechanism 3 when the slider plate 32 is in an intermediate state. FIG. 19 is a diagram of a structure of the sliding opening/closing mechanism 3 when the slider plate 32 is in the second state. With reference to FIG. 17 to FIG. 19, in this embodiment, the sliding opening/closing mechanism 3 may include a supporting plate, a base plate 31, a slider plate 32, a first drive assembly 33, a second drive assembly 34, a locking structure, and a stopper plate 36. Each drive assembly includes a swing rod 331, a rotating arm 332, an elastic piece 333, and a rolling piece 334. Structures and disposing manners of the supporting plate, the base plate 31, the slider plate 32, the locking structure, the stopper plate 36, the rotating arm 332, and the rolling piece 334 may be roughly the same as those in the foregoing embodiment. Details about these components are not described herein again. This embodiment is different from the foregoing embodiment in the following: A first swing arm 3311 and a second swing arm 3312 of the swing rod 331 are separate parts, and are connected in a transmission manner with gears engaging with each other.

In a specific implementation, the first swing arm 3311, a second end of the rotating arm 332, and a drive side 321 of the slider plate 32 jointly clamp the rolling piece 334, an end that is of the first swing arm 3311 and that is away from the rolling piece 334 is rotatably connected to the base plate 31 through a first rotating shaft 3313, and the end of the first swing arm 3311 is provided with a first gear 33113. The second swing arm 3312 may include a fastening portion 33121, and a first lug 33122 and a second lug 33123 that are provided on the fastening portion 33121, the fastening portion 33121 may be rotatably connected to the base plate 31 through a second rotating shaft 3314, an end portion of the first lug 33122 is connected to the elastic piece 333, the second lug 33123 is provided with a second gear 33124, and the second gear 33124 may engage with the first gear 33113 of the first swing arm 3311. In this way, the second swing arm 3312 is connected to the first swing arm 3311 in a transmission manner. In this case, lines between a position at which the fastening portion 33121 is hinged to the base plate 31, a position at which the first lug 33122 is connected to the elastic piece 333, and a position at which the second lug 33123 engages with the first swing arm 3311 may approximately form a triangle.

In this embodiment, for each drive assembly, the elastic piece 333 may be disposed on a side that is of the swing rod 331 of the drive assembly and that faces the other drive assembly, one end of the elastic piece 333 is disposed facing a first side 311 of the base plate 31, and the other end is disposed facing a second side 312 of the base plate 31. In addition, the elastic piece 333 in this embodiment may also be in a form of a spring. For a purpose of enabling each drive assembly to obtain a sufficient driving force, the elastic piece 333 of the drive assembly may include a plurality of springs that are disposed in parallel. For example, FIG. 17 shows a case in which two springs are disposed. In this case, the elastic piece 333 may further include a first connecting portion 3331 and a second connecting portion 3332. Two ends of each spring are fastened to the first connecting portion 3331 and the second connecting portion 3332, respectively. The first connecting portion 3331 is fastened to the base plate 31. The second connecting portion 3332 is connected to the first lug 33122 of the second swing arm 3312.

Likewise, in this embodiment, the elastic piece 333 may also be designed as follows: When the slider plate 32 is in the first state, the elastic piece 333 is in a stretched state in which energy is stored, and when the slider plate 32 is in the second state, the elastic piece 333 is still in a stretched state in which partial energy is stored. When the slider plate 32 is switched from the first state to the second state, the locking structure is opened, and the elastic piece 333 gradually retracts from a stretched state and releases stored elastic potential energy, driving the second swing arm 3312 to rotate clockwise. With the first gear 33113 and the second gear 33124 engaging with each other, the second swing arm 3312 can drive the first swing arm 3311 to rotate counterclockwise. In this case, the rotating arm 332 also rotates counterclockwise synchronously. The first swing arm 3311 and the rotating arm 332 jointly push the rolling piece 334 to move towards the second side 312 of the base plate 31 along a first slope of a first protrusion 3211, pushing the slider plate 32 to protrude from the first side 311 of the base plate 31 to the outside. When the slider plate 32 slides to a position at which the first protrusion 3211 presses against the stopper plate 36, the slider plate 32 is switched to the second state. When the slider plate 32 is switched from the second state to the first state, the slider plate 32 is pushed to slide towards the second side 312 of the base plate 31. The slider plate 32 pushes the rolling piece 334 to move towards the second side 312 of the base plate 31 along the first slope of the first protrusion 3211, and further drives the first swing arm 3311 and the rotating arm 332 to synchronously rotate clockwise. With the first gear 33113 and the second gear 33124 engaging with each other, the first swing arm 3311 can drive the second swing arm 3312 to rotate counterclockwise. The elastic piece 333 gradually stretches under pulls from the second swing arm 3312. When the slider plate 32 slides to a position at which guide grooves 322 on two sides of the slider plate 32 are in contact with a stopper protrusion on the supporting plate, the locking structure is closed and locks the slider plate 32 into the first state.

In addition, in this embodiment, when the slider plate 32 switches from the first state to the second state, forces exerted on the rolling piece 334 are roughly the same as those in the foregoing embodiment. Therefore, the sliding opening/closing mechanism 3 can also provide stable driving forces for the slider plate 32, so that an electronic device can switch from a closed state to an unfolded state at a constant speed, effectively improving users' use experience.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A sliding opening/closing mechanism (3), comprising a base plate (31), a slider plate (32), and a first drive assembly (33), wherein
the base plate comprises a first side and a second side that are provided opposite to each other in a first direction;
the slider plate is slidably disposed on the base plate in the first direction, the slider plate comprises a drive side that is provided facing the second side, and the slider plate has a first state in which the slider plate is stacked on the base plate and a second state in which at least part of the slider plate protrudes from the first side to the outside of the base plate;
the first drive assembly comprises a swing rod (331), a rotating arm (332), an elastic piece (333), and a rolling piece (334),
wherein the swing rod is rotatably connected to the base plate through a first rotating shaft; one end of the elastic piece is connected to a part that is of the swing rod and that is located on one side of the first rotating shaft, and the other end is connected to the base plate; the rotating arm is disposed on a side that is of the swing rod and that faces the first side, and a first end of the rotating arm is rotatably connected to the base plate; and the rolling piece is clamped among a part that is of the swing rod and that is located on the other side of the first rotating shaft, a second end of the rotating arm, and the drive side of the slider plate; and
when the slider plate switches from the first state to the second state, the swing rod rotates under an action of the elastic piece, and pushes, together with the rotating arm, the rolling piece to move towards the first side, and the rolling piece pushes the slider plate to protrude from the first side to the outside of the base plate; and when the slider plate switches from the second state to the first state, the slider plate pushes the rolling piece to move towards the second side, the rolling piece pushes the swing rod and the rotating arm to rotate, and the swing rod drives the elastic piece into an original position.

2. The sliding opening/closing mechanism according to claim 1, wherein the rolling piece and the swing rod are in rolling contact; and/or the rolling piece and the rotating arm are in rolling contact; and/or the rolling piece and the slider plate are in rolling contact.

3. The sliding opening/closing mechanism according to claim 1 or 2, wherein the drive side has a first protrusion, and the first protrusion has a first slope that is inclined relative to the first side; and
the rolling piece is disposed in contact with the first slope.

4. The sliding opening/closing mechanism according to claim 3, further comprising a stopper plate that is fastened on the base plate, wherein the stopper plate is disposed close to the first side of the base plate, and the stopper plate is configured to press against the first protrusion when the slider plate is in the second state.

5. The sliding opening/closing mechanism according to any one of claims 1 to 4, wherein the swing rod comprises a first swing arm and a second swing arm, the first swing arm and the second swing arm are connected and disposed at an angle, the first swing arm clamps the rolling piece jointly with the second end of the rotating arm and the drive side of the slider plate, the second swing arm is connected to the elastic piece, and the first rotating shaft is disposed in a corner portion that is of the swing rod and that is formed by the first swing arm and the second swing arm.

6. The sliding opening/closing mechanism according to claim 5, wherein when the slider plate is in the first state, an opening of the corner portion of the swing rod is provided facing the second side.

7. The sliding opening/closing mechanism according to claim 5 or 6, wherein the elastic piece is disposed on a side that is of the swing rod and that faces the second side, and a position at which the elastic piece and the base plate are connected is provided close to an edge of an end of the second side.

8. The sliding opening/closing mechanism according to any one of claims 1 to 4, wherein the swing rod comprises a first swing arm and a second swing arm;
the first swing arm clamps the rolling piece jointly with the second end of the rotating arm and the drive side of the slider plate, an end portion that is of the first swing arm and that is away from the rolling piece is provided with a first gear, and the first rotating shaft is disposed at a position close to the end portion of the first swing arm; and
the second swing arm comprises a fastening portion, and a first lug and a second lug that are provided on the fastening portion, the fastening portion is rotatably connected to the base plate, an end portion of the first lug is connected to the elastic piece, the second lug is provided with a second gear, and the second gear engages with the first gear.

9. The sliding opening/closing mechanism according to claim 8, wherein one end of the elastic piece is disposed facing the first side, and the other end is disposed facing the second side.

10. The sliding opening/closing mechanism according to any one of claims 5 to 9, wherein a length of the first swing arm is greater than a length of the second swing arm.

11. The sliding opening/closing mechanism according to any one of claims 5 to 10, wherein the first swing arm is provided with a dowel, the rotating arm is provided with a sliding groove, and the dowel is slidably disposed in the sliding groove; or
the first swing arm is provided with a sliding groove, the rotating arm is provided with a dowel, and the dowel is slidably disposed in the sliding groove.

12. The sliding opening/closing mechanism according to any one of claims 5 to 10, wherein the rolling piece is hinged to the second end of the rotating arm.

13. The sliding opening/closing mechanism according to any one of claims 1 to 12, wherein the rolling piece is a disc;
the swing rod is provided with a rolling groove, and/or the second end of the rotating arm is provided with a rolling groove, and/or the drive side is provided with a rolling groove; and
the disc is partially fitted in the rolling groove.

14. An electronic device, comprising a housing (1), a flexible display (2), and the sliding opening/closing mechanism (3) according to any one of claims 1 to 13, wherein
the base plate is fastened on the housing, and the slider plate is disposed on a side that is of the base plate and that is away from the housing; and
the flexible display is fastened to the slider plate; when the slider plate is in the first state, one part of the flexible display covers the slider plate, and the other part is accommodated in the housing; and when the slider plate is in the second state, the flexible display contiguously covers the base plate and the slider plate.

15. The electronic device according to claim 14, wherein a roller is disposed in the housing, the roller is disposed close to the second side of the base plate, and a rotating axis of the roller is perpendicular to the first direction; and
the flexible display is fastened to the slider plate after bypassing the roller.

## Patentansprüche

1. Schiebeöffnungs-/-schließmechanismus (3), der eine Grundplatte (31), eine Schiebeplatte (32) und eine erste Antriebsanordnung (33) umfasst, wobei
die Grundplatte eine erste Seite und eine zweite Seite umfasst, die in einer ersten Richtung einander gegenüberliegend bereitgestellt sind;
die Schiebeplatte in der ersten Richtung verschiebbar auf der Grundplatte angeordnet ist, wobei die Schiebeplatte eine Antriebsseite umfasst, die der zweiten Seite zugewandt bereitgestellt ist, und die Schiebeplatte einen ersten Zustand, in dem die Schiebeplatte auf der Grundplatte gestapelt ist, und einen zweiten Zustand, in dem mindestens ein Teil der Schiebeplatte von der ersten Seite zur Außenseite der Grundplatte vorsteht, aufweist;
die erste Antriebsanordnung eine Schwenkstange (331), einen Dreharm (332), ein elastisches Teil (333) und ein Rollteil (334) umfasst,
wobei die Schwenkstange durch eine erste Drehwelle drehbar mit der Grundplatte verbunden ist; ein Ende des elastischen Teils mit einem Teil verbunden ist, der zu der Schwenkstange gehört und der sich auf einer Seite der ersten Drehwelle befindet, und das andere Ende mit der Grundplatte verbunden ist; der Dreharm auf einer Seite angeordnet ist, die zu der Schwenkstange gehört und die der ersten Seite zugewandt ist, und ein erstes Ende des Dreharms drehbar mit der Grundplatte verbunden ist; und das Rollteil zwischen einem Teil, der zu der Schwenkstange gehört und der sich auf der anderen Seite der ersten Drehwelle befindet, einem zweiten Ende des Dreharms und der Antriebsseite der Schiebeplatte eingeklemmt ist; und
wobei, wenn die Schiebeplatte von dem ersten Zustand in den zweiten Zustand wechselt, sich die Schwenkstange unter einer Wirkung des elastischen Teils dreht und zusammen mit dem Dreharm so auf das Rollteil drückt, dass es sich zur ersten Seite hin bewegt, und das Rollteil so auf die Schiebeplatte drückt, dass sie von der ersten Seite zur Außenseite der Grundplatte vorsteht; und wenn die Schiebeplatte von dem zweiten Zustand in den ersten Zustand wechselt, die Schiebeplatte so auf das Rollteil drückt, dass es sich zur zweiten Seite hin bewegt, das Rollteil so auf die Schwenkstange und den Dreharm drückt, dass sie sich drehen, und die Schwenkstange das elastische Teil in eine Ausgangsposition antreibt.

2. Schiebeöffnungs-/-schließmechanismus nach Anspruch 1, wobei das Rollteil und die Schwenkstange in Rollkontakt stehen; und/oder das Rollteil und der Dreharm in Rollkontakt stehen; und/oder das Rollteil und die Schiebeplatte in Rollkontakt stehen.

3. Schiebeöffnungs-/-schließmechanismus nach Anspruch 1 oder 2, wobei die Antriebsseite einen ersten Vorsprung aufweist und der erste Vorsprung eine erste Schräge aufweist, die relativ zur ersten Seite geneigt ist; und
wobei das Rollteil in Kontakt mit der ersten Schräge angeordnet ist.

4. Schiebeöffnungs-/-schließmechanismus nach Anspruch 3, der ferner eine Anschlagplatte umfasst, die an der Grundplatte befestigt ist, wobei die Anschlagplatte nahe der ersten Seite der Grundplatte angeordnet ist und die Anschlagplatte dazu ausgelegt ist, gegen den ersten Vorsprung zu drücken, wenn sich die Schiebeplatte in dem zweiten Zustand befindet.

5. Schiebeöffnungs-/-schließmechanismus nach einem der Ansprüche 1 bis 4, wobei die Schwenkstange einen ersten Schwenkarm und einen zweiten Schwenkarm umfasst, der erste Schwenkarm und der zweite Schwenkarm verbunden und in einem Winkel angeordnet sind, der erste Schwenkarm das Rollteil gemeinsam mit dem zweiten Ende des Dreharms und der Antriebsseite der Schiebeplatte einklemmt, der zweite Schwenkarm mit dem elastischen Teil verbunden ist und die erste Drehwelle in einem Eckabschnitt angeordnet ist, der zu der Schwenkstange gehört und der durch den ersten Schwenkarm und den zweiten Schwenkarm gebildet ist.

6. Schiebeöffnungs-/-schließmechanismus nach Anspruch 5, wobei, wenn sich die Schiebeplatte in dem ersten Zustand befindet, eine Öffnung des Eckabschnitts der Schwenkstange der zweiten Seite zugewandt bereitgestellt ist.

7. Schiebeöffnungs-/-schließmechanismus nach Anspruch 5 oder 6, wobei das elastische Teil auf einer Seite angeordnet ist, die zu der Schwenkstange gehört und die der zweiten Seite zugewandt ist, und eine Position, an der das elastische Teil und die Grundplatte verbunden sind, nahe einer Kante eines Endes der zweiten Seite bereitgestellt ist.

8. Schiebeöffnungs-/-schließmechanismus nach einem der Ansprüche 1 bis 4, wobei die Schwenkstange einen ersten Schwenkarm und einen zweiten Schwenkarm umfasst;
wobei der erste Schwenkarm das Rollteil gemeinsam mit dem zweiten Ende des Dreharms und der Antriebsseite der Schiebeplatte einklemmt, ein Endabschnitt, der zu dem ersten Schwenkarm gehört und der von dem Rollteil entfernt ist, mit einem ersten Zahnrad versehen ist und die erste Drehwelle an einer Position nahe dem Endabschnitt des ersten Schwenkarms angeordnet ist; und
wobei der zweite Schwenkarm einen Befestigungsabschnitt und eine erste Nase und eine zweite Nase umfasst, die auf dem Befestigungsabschnitt bereitgestellt sind, der Befestigungsabschnitt drehbar mit der Grundplatte verbunden ist, ein Endabschnitt der ersten Nase mit dem elastischen Teil verbunden ist, die zweite Nase mit einem zweiten Zahnrad versehen ist und das zweite Zahnrad mit dem ersten Zahnrad in Eingriff steht.

9. Schiebeöffnungs-/-schließmechanismus nach Anspruch 8, wobei ein Ende des elastischen Teils der ersten Seite zugewandt angeordnet ist und das andere Ende der zweiten Seite zugewandt angeordnet ist.

10. Schiebeöffnungs-/-schließmechanismus nach einem der Ansprüche 5 bis 9, wobei eine Länge des ersten Schwenkarms größer als eine Länge des zweiten Schwenkarms ist.

11. Schiebeöffnungs-/-schließmechanismus nach einem der Ansprüche 5 bis 10, wobei der erste Schwenkarm mit einem Stift versehen ist, der Dreharm mit einer Schiebenut versehen ist und der Stift verschiebbar in der Schiebenut angeordnet ist; oder
wobei der erste Schwenkarm mit einer Schiebenut versehen ist, der Dreharm mit einem Stift versehen ist und der Stift verschiebbar in der Schiebenut angeordnet ist.

12. Schiebeöffnungs-/-schließmechanismus nach einem der Ansprüche 5 bis 10, wobei das Rollteil an dem zweiten Ende des Dreharms angelenkt ist.

13. Schiebeöffnungs-/-schließmechanismus nach einem der Ansprüche 1 bis 12, wobei das Rollteil eine Scheibe ist;
wobei die Schwenkstange mit einer Rollnut versehen ist und/oder das zweite Ende des Dreharms mit einer Rollnut versehen ist und/oder die Antriebsseite mit einer Rollnut versehen ist; und
wobei die Scheibe teilweise in die Rollnut eingesetzt ist.

14. Elektronisches Gerät, das ein Gehäuse (1), eine flexible Anzeige (2) und den Schiebeöffnungs-/-schließmechanismus (3) nach einem der Ansprüche 1 bis 13 umfasst, wobei
die Grundplatte auf dem Gehäuse befestigt ist und die Schiebeplatte auf einer Seite angeordnet ist, die zu der Grundplatte gehört und die von dem Gehäuse entfernt ist; und
die flexible Anzeige an der Schiebeplatte befestigt ist; wobei, wenn sich die Schiebeplatte in dem ersten Zustand befindet, ein Teil der flexiblen Anzeige die Schiebeplatte bedeckt und der andere Teil in dem Gehäuse aufgenommen ist; und wenn sich die Schiebeplatte in dem zweiten Zustand befindet, die flexible Anzeige die Grundplatte und die Schiebeplatte durchgehend abdeckt.

15. Elektronisches Gerät nach Anspruch 14, wobei eine Rolle in dem Gehäuse angeordnet ist, die Rolle nahe der zweiten Seite der Grundplatte angeordnet ist und eine Drehachse der Rolle senkrecht zur ersten Richtung steht; und
wobei die flexible Anzeige nach Umgehen der Rolle an der Schiebeplatte befestigt ist.

## Revendications

1. Mécanisme d'ouverture/fermeture coulissant (3), comprenant une plaque de base (31), une plaque coulissante (32), et un premier ensemble d'entraînement (33), dans lequel
la plaque de base comprend un premier côté et un second côté qui sont prévus de façon opposée l'un à l'autre dans une première direction ;
la plaque coulissante est disposée de façon coulissante sur la plaque de base dans la première direction, la plaque coulissante comprend un côté d'entraînement qui est prévu en face du second côté, et la plaque coulissante a un premier état dans lequel la plaque coulissante est empilée sur la plaque de base et un second état dans lequel au moins une partie de la plaque coulissante fait saillie depuis le premier côté jusqu'à l'extérieur de la plaque de base ;
le premier ensemble d'entraînement comprend une tige de pivotement (331), un bras rotatif (332), une pièce élastique (333), et une pièce roulante (334),
dans lequel la tige de pivotement est reliée de façon rotative à la plaque de base par le biais d'un premier arbre rotatif ; une extrémité de la pièce élastique est reliée à une partie qui est de la tige de pivotement et qui est située sur un côté du premier arbre rotatif, et l'autre extrémité est reliée à la plaque de base ; le bras rotatif est disposé sur un côté qui est de la tige de pivotement et qui fait face au premier côté, et une première extrémité du bras rotatif est reliée de façon rotative à la plaque de base ; et la pièce roulante est serrée parmi une partie qui est de la tige de pivotement et qui est située sur l'autre côté du premier arbre rotatif, une seconde extrémité du bras rotatif, et le côté d'entraînement de la plaque coulissante ; et
lorsque la plaque coulissante passe du premier état au second état, la tige de pivotement entre en rotation sous une action de la pièce élastique, et pousse, conjointement avec le bras rotatif, la pièce roulante à se déplacer vers le premier côté, et la pièce roulante pousse la plaque coulissante à faire saillie depuis le premier côté jusqu'à l'extérieur de la plaque de base ; et, lorsque la plaque coulissante passe du second état au premier état, la plaque coulissante pousse la pièce roulante à se déplacer vers le second côté, la pièce roulante pousse la tige de pivotement et le bras rotatif à entrer en rotation, et la tige de pivotement entraîne la pièce élastique jusque dans une position d'origine.

2. Mécanisme d'ouverture/fermeture coulissant selon la revendication 1, dans lequel la pièce roulante et la tige de pivotement sont en contact roulant ; et/ou la pièce roulante et le bras rotatif sont en contact roulant ; et/ou la pièce roulante et la plaque coulissante sont en contact roulant.

3. Mécanisme d'ouverture/fermeture coulissant selon la revendication 1 ou 2, dans lequel le côté d'entraînement a une première saillie, et la première saillie a une première pente qui est inclinée relativement au premier côté ; et
la pièce roulante est disposée en contact avec la première pente.

4. Mécanisme d'ouverture/fermeture coulissant selon la revendication 3, comprenant en outre une plaque de butée qui est fixée sur la plaque de base, dans lequel la plaque de butée est disposée près du premier côté de la plaque de base, et la plaque de butée est configurée pour presser contre la première saillie lorsque la plaque coulissante est dans le second état.

5. Mécanisme d'ouverture/fermeture coulissant selon l'une quelconque des revendications 1 à 4, dans lequel la tige de pivotement comprend un premier bras de pivotement et un second bras de pivotement, le premier bras de pivotement et le second bras de pivotement sont reliés et disposés à un angle, le premier bras de pivotement serre la pièce roulante conjointement avec la seconde extrémité du bras rotatif et le côté d'entraînement de la plaque coulissante, le second bras de pivotement est relié à la pièce élastique, et le premier arbre rotatif est disposé dans une portion de coin qui est de la tige de pivotement et qui est formée par le premier bras de pivotement et le second bras de pivotement.

6. Mécanisme d'ouverture/fermeture coulissant selon la revendication 5, dans lequel, lorsque la plaque coulissante est dans le premier état, une ouverture de la portion de coin de la tige de pivotement est prévue en face du second côté.

7. Mécanisme d'ouverture/fermeture coulissant selon la revendication 5 ou 6, dans lequel la pièce élastique est disposée sur un côté qui est de la tige de pivotement et qui fait face au second côté, et une position à laquelle la pièce élastique et la plaque de base sont reliées est prévue près d'un bord d'une extrémité du second côté.

8. Mécanisme d'ouverture/fermeture coulissant selon l'une quelconque des revendications 1 à 4, dans lequel la tige de pivotement comprend un premier bras de pivotement et un second bras de pivotement ;
le premier bras de pivotement serre la pièce roulante conjointement avec la seconde extrémité du bras rotatif et le côté d'entraînement de la plaque coulissante, une portion d'extrémité qui est du premier bras de pivotement et qui est éloignée de la pièce roulante est pourvue d'un premier élément denté d'engrenage, et le premier arbre rotatif est disposé à une position près de la portion d'extrémité du premier bras de pivotement ; et
le second bras de pivotement comprend une portion de fixation, et une première patte et une seconde patte qui sont prévues sur la portion de fixation, la portion de fixation est reliée de façon rotative à la plaque de base, une portion d'extrémité de la première patte est reliée à la pièce élastique, la seconde patte est pourvue d'un second élément denté d'engrenage, et le second élément denté d'engrenage entre en prise avec le premier élément denté d'engrenage.

9. Mécanisme d'ouverture/fermeture coulissant selon la revendication 8, dans lequel une extrémité de la pièce élastique est disposée en face du premier côté, et l'autre extrémité est disposée en face du second côté.

10. Mécanisme d'ouverture/fermeture coulissant selon l'une quelconque des revendications 5 à 9, dans lequel une longueur du premier bras de pivotement est supérieure à une longueur du second bras de pivotement.

11. Mécanisme d'ouverture/fermeture coulissant selon l'une quelconque des revendications 5 à 10, dans lequel le premier bras de pivotement est pourvu d'un goujon, le bras rotatif est pourvu d'une rainure de coulissement, et le goujon est disposé de façon coulissante dans la rainure de coulissement ; ou
le premier bras de pivotement est pourvu d'une rainure de coulissement, le bras rotatif est pourvu d'un goujon, et le goujon est disposé de façon coulissante dans la rainure de coulissement.

12. Mécanisme d'ouverture/fermeture coulissant selon l'une quelconque des revendications 5 à 10, dans lequel la pièce roulante est articulée sur la seconde extrémité du bras rotatif.

13. Mécanisme d'ouverture/fermeture coulissant selon l'une quelconque des revendications 1 à 12, dans lequel la pièce roulante est un disque ;
la tige de pivotement est pourvue d'une rainure de roulement, et/ou la seconde extrémité du bras rotatif est pourvue d'une rainure de roulement, et/ou le côté d'entraînement est pourvu d'une rainure de roulement ; et
le disque est partiellement ajusté dans la rainure de roulement.

14. Dispositif électronique, comprenant un boîtier (1), un écran d'affichage flexible (2), et le mécanisme d'ouverture/fermeture coulissant (3) selon l'une quelconque des revendications 1 à 13, dans lequel
la plaque de base est fixée sur le boîtier, et la plaque coulissante est disposée sur un côté qui est de la plaque de base et qui est éloigné du boîtier ; et
l'écran d'affichage flexible est fixé à la plaque coulissante ; lorsque la plaque coulissante est dans le premier état, une partie de l'écran d'affichage flexible couvre la plaque coulissante, et l'autre partie est logée dans le boîtier ; et, lorsque la plaque coulissante est dans le second état, l'écran d'affichage flexible couvre de façon contiguë la plaque de base et la plaque coulissante.

15. Dispositif électronique selon la revendication 14, dans lequel un rouleau est disposé dans le boîtier, le rouleau est disposé près du second côté de la plaque de base, et un axe de rotation du rouleau est perpendiculaire à la première direction ; et
l'écran d'affichage flexible est fixé à la plaque coulissante après avoir contourné le rouleau.
